# EUROPÄISCHE PATENTSCHRIFT

(11) **EP 0 364 681 B1**
(45) Veröffentlichungstag und Bekanntmachung des Hinweises auf die Patenterteilung: **10.11.1993**
(21) Anmeldenummer: 89114318.2
(22) Anmeldetag: 03.08.1989
(51) Int. Cl.: C08F 20/04, C11D 3/37

(54) **Copolymerisate ungesättigter Carbonsäuren und ihre Verwendung**
Copolymers of unsaturated carboxylic acids, and their use
Copolymères d'acides carboxyliques insaturés et leur utilisation

(30) Priorität: 07.10.1988 DE 3834237
(43) Veröffentlichungstag der Anmeldung: 25.04.1990
(73) Patentinhaber: GRILLO-WERKE AG, D-47169 Duisburg (DE)
(72) Erfinder: Driemel, Klaus, Dipl.-Ing., D-4100 Duisburg 25 (DE); Bunthoff, Klaus, Dr. Dipl.-Chem., D-4100 Duisburg 11 (DE); Rohe, Dieter, Dr. Dipl.-Chem., D-4220 Dinslaken (DE); Nies, Helmut, D-4134 Rheinberg 3 (DE)
(74) Vertreter: Werner, Hans-Karsten, Dr.Dipl.-Chem.

(56) Entgegenhaltungen:
- EP-A- 0 289 895
- DE-A- 1 945 340

## Beschreibung

Gegenstand der Anmeldung DE-A-37 14 732.3 sind Copolymerisate auf Basis von ungesättigten Carbonsäuren und zur Enolatbildung befähigten Monosacchariden, dadurch erhältlich, daß die ungesättigten Carbonsäuren in einer Menge von 35 bis 80%, bezogen auf die Gesamtmonomeren, mit einer alkalischen Lösung der zur Enolatbildung befähigten Monosaccharide in Gegenwart von radikalischen Initiatoren bei Temperaturen zwischen 60 und 110°C, wobei zumindest eines der beiden Monomeren dem Reaktionsansatz kontinuierlich zugeführt wird, copolymerisiert, dann abgekühlt und durch Ansäuern ausgefällt werden. Weiterhin betrifft die Anmeldung die Verwendung dieser Copolymerisate als Sequestrierungsmittel, Komplexbildner und Co-Builder in Wasch- und Reinigungsmitteln.

Es wurde jetzt gefunden, daß außer den zur Enolatbildung befähigten Monosacchariden auch die Disaccharide Palatinose und Leukrose zur Enolatbildung befähigt sind und daher in gleicher Weise mit ungesättigten Carbonsäuren copolymerisiert werden können.

Gegenstand der Anmeldung sind Copolymerisate auf Basis von ungesättigten Carbonsäuren und zur Enolatbildung befähigten Zuckern, dadurch erhältlich daß die ungesättigten Carbonsäuren in einer Menge von 35 bis 80%, bezogen auf die Gesamtmonomeren, mit einer alkalischen Lösung von Palatinose und/oder Leukrose in Gegenwart von radikalischen Initiatoren bei Temperaturen zwischen 60 und 110°C, wobei mindestens eines der beiden Monomeren dem Reaktionsansatz kontinuierlich zugeführt wird, copolymerisiert, dann abgekühlt und durch Ansäuern ausgefällt werden.

Bevorzugt sind Copolymerisate, die durch Umsetzung von alkalischen Lösungen von Palatinose und/oder Leukrose bei pH-Werten von 8 bis 10 mit Acrylsäure und/oder Methacrylsäure in Gegenwart von Wasserstoffperoxid erhältlich sind.

Die Copolymerisate Können als Sequestrierungsmittel, Komplexbildner und Co-Builder in Wasch- und Reinigungsmitteln verwendet werden.

Palatinose ist eine 6-O-alpha-D-Glucopyranosyl-D-fruktose und Leukrose eine 5-O-alpha-D-Glucopyranosyl-D-fruktose. Diese Zucker entstehen beispielsweise durch Umsetzung von Saccharose und Fruktose in Gegenwart von Glucosyltransferasen. Palatinose wird beispielsweise von der Südzucker AG in Frankenthal und Leukrose Von Pfeifer & Langen in Dormagen in größeren Mengen hergestellt.

Die theoretisch zur Enolatbildung befähigte Saccharose ist offensichtlich sterisch so gehindert, daß keine Copolymerisation mit ungesättigten Carbonsäuren möglich ist.

Sowohl Palatinose als auch Leukrose reagieren sehr heftig bei der radikalischen Copolymerisation mit Acrylsäure und liefern leicht gelblich gefärbte Produkte mit einem vergleichbar guten Calciumbindevermögen. Der biologische Abbaubarkeitsgrad liegt jedoch mit über 95% noch günstiger als bei den Copolymerisaten gemäß der Hauptanmeldung.

Die Herstellung der Copolymerisate von Palatinose und Leukrose erfolgt in analoger Weise wie bei den zur Enolatbildung befähigten Monosacchariden. Ein besonderer Vorteil ist, daß auch ungereinigte oder mit anderen Sacchariden verunreinigte Fraktionen der Palatinose und Leukrose eingesetzt werden können, da die Verunreinigungen nicht oder in nicht störender Form in das Copolymerisat eingebaut werden. Sofern bei der Herstellung der Palatinose oder Leukrose Glucosyltransferasen eingesetzt werden, die nicht ausreichend spezifisch sind oder aus Gemischen verschiedener Glucosyltransferasen bestehen, fallen bei der Produktion der Palatinose oder Leukrose Mutterlaugen an, in denen Palatinose und Leukrose nebeneinander vorliegen. Aus diesen Gemischen ist eine Auftrennung nur mit größten Schwierigkeiten möglich. Derartige Mutterlaugen könnten aber ohne weiteres zur Herstellung der erfindungsgemäßen Copolymerisate verwendet werden.

Als ungesättigte Carbonsäuren kommen wiederum in erster Linie die monoethylenisch ungesättigten Monocarbonsäuren mit 3 bis 10 Kohlenstoffatomen in Frage, dabei insbesondere die Acrylsäure und Methacrylsäure. Prinzipiell können aber auch andere ungesättigte Carbonsäuren wie Maleinsäure und Itakonsäure eingesetzt werden.

Als radikalische Initiatoren werden insbesondere Peroxide eingesetzt. Besonders einfach ist die Verwendung von Wasserstoffperoxid.

Das Calciumbindevermögen der erfindungsgemäßen Copolymerisate erfolgt beispielsweise durch Trübungstitration mit Calciumacetat. Dazu löst man 1 g des zu prüfenden Copolymerisats in 100 ml destilliertem Wasser auf und versetzt dieses dann mit 10 ml 2%-iger Natroncarbonatlösung. Der pH-Wert dieser Lösung wird auf 11 eingestellt und während der Titration konstant gehalten. Man titriert dann mit 4,4%-iger Calciumacetatlösung, bis eine deutliche konstante Trübung auftritt, welche nephelometrisch bestimmt wird. Die Zugabe der Calciumacetatlösung erfolgt in Intervallen von 30 Sekunden mit jeweils 1 ml.

In den nachfolgenden Beispielen sind einige typische Copolymerisate und ihre Herstellung beschrieben.

### Beispiel 1

180 g Palatinose werden in 220 g Wasser gelöst und im Reaktionsgefäß vorgelegt. Zu dieser Lösung gibt man 108 g Acrylsäure und 57 g 30%-iges H₂O₂. Die Lösung wird unter Rühren auf 60 bis 65°C erhitzt. Die Wärmezufuhr wird nun gestoppt. Durch den exothermen Verlauf der Reaktion erwärmt sich die Reaktionslösung auf 80°C, wobei nun durch Kühlung die Temperatur konstant auf 80°C über 60 Minuten gehalten wird. Der pH-Wert wird während der Versuchszeit konstant auf 9,0 gehalten.

Nach 60 Minuten Reaktionszeit wird das Reaktionsgemisch abgekühlt. Der Wirkstoffgehalt dieser polymeren Lösung beträgt 31%. Das Calciumbindevermögen beträgt 520 mg Calciumcarbonat/g Wirksubstanz. Die biologische Abbaubarkeit beträgt 97%.

### Beispiel 2

180 g Palatinose werden in 220 g Wasser gelöst. Zu dieser Lösung werden 108 g Acrylsäure und 57 g 30%-iges H₂O₂ gegeben. Das Reaktionsgemisch wird auf 55°C erhitzt. Danach wird die Wärmezufuhr abgestellt. Über eine Zeit von 240 Minuten läßt man die Reaktanden miteinander reagieren, wobei die Temperaturführung durch Kühlung so gesteuert wird, daß die Temperatur auf maximal 64°C ansteigt. Der pH-Wert wird über die gesamte Zeit konstant auf 8,0 gehalten. Nach 240 Minuten Reaktionszeit wird die Lösung abgekühlt. Der Wirkstoffgehalt dieser polymeren Lösung beträgt 31%. Das Calciumbindevermögen beträgt 520 mg Calciumcarbonat/g Wirksubstanz. Die biologische Abbaubarkeit beträgt 95%.

### Beispiel 3

180 g Leukrose werden in 220 g Wasser gelöst und im Reaktionsgefäß vorgelegt. Zu dieser Lösung gibt man 108 g Acrylsäure und 57 g 30%-iges H₂O₂. Die Losung wird unter Rühren auf 60 bis 65°C erhitzt. Die Wärmezufuhr wird nun gestoppt. Durch den exothermen Verlauf der Reaktion erwärmt sich die Reaktionslösung auf 80°C, wobei nun durch Kühlung die Temperatur konstant auf 80°C über 60 Minuten gehalten wird. Der pH-Wert wird während der Versuchszeit konstant auf 9,0 gehalten. Nach 60 Minuten Reaktionszeit wird das Reaktionsgemisch abgekühlt. Der Wirkstoffgehalt dieser polymeren Lösung beträgt 31%. Das Calciumbindevermögen beträgt 520 mg Calciumcarbonat/g Wirksubstanz. Die biologische Abbaubarkeit beträgt 97%.

## Patentansprüche

1. Copolymerisate auf Basis von ungesättigten Carbonsäuren und zur Enolatbildung befähigten Zuckern, dadurch erhältlich daß die ungesättigten Carbonsäuren in einer Menge von 35 bis 80%, bezogen auf die Gesamtmonomeren, mit einer alkalischen Lösung von Palatinose und/oder Leukrose in Gegenwart von radikalischen Initiatoren bei Temperaturen zwischen 60 und 110°C, wobei mindestens eines der beiden Monomeren dem Reaktionsansatz kontinuierlich zugeführt wird, copolymerisiert, dann abgekühlt und durch Ansäuern ausgefällt werden.

2. Copolymerisate gemäß Anspruch 1, erhältlich durch Umsetzung von alkalischen Lösungen von Palatinose und/oder Leukrose bei pH-Werten von 8 bis 10 mit Acrylsäure und/oder Methacrylsäure in Gegenwart von Wasserstoffperoxid.

3. Verwendung der Copolymerisate gemäß Ansprüchen 1 oder 2 als Sequestrierungsmittel, Komplexbildner und Co-Builder in Wasch- und Reinigungsmitteln.

## Claims

1. Copolymerizates based on unsaturated carboxylic acids and sugars capable of forming enolates, obtainable by copolymerizing said unsaturated carboxylic acids in an amount of from 35 to 80%, based on total monomers, with an alkaline solution of palatinose and/or leucrose in the presence of free radical initiators at temperatures of between 60°C and 110°C, at least one of the two monomers being continuously supplied to the reaction mixture, then cooling and precipitating by acidification.

2. Copolymerizates according to claim 1, obtainable by reacting alkaline solutions of palatinose and/or leucrose at pH values of from 8 to 10 with acrylic acid and/or methacrylic acid in the presence of hydrogen peroxide.

3. Use of the copolymerizates according to claim 1 or 2 as sequestrants, complexants and co-builders in detergents and cleaning agents.

## Revendications

1. Copolymères à base d'acides carboxyliques insaturés et de sucres capables de former des énolates, qu'on obtient en copolymérisant les acides carboxyliques insaturés, en une quantité de 35 à 80 %, par rapport à la quantité totale de monomères, avec une solution alcaline de palatinose et/ou de leucrose, en présence d'initiateurs radicalaires, à des températures comprises entre 60 et 110°C, au moins un des deux monomères du mélange de réaction étant amené en continu, ensuite on refroidit le copolymère et on le fait précipiter par acidification.

2. Copolymères selon la revendication 1, obtenus par réaction de solutions alcalines de palatinose et/ou de leucrose, à pH 8 à 10, avec de l'acide acrylique et/ou de l'acide méthacrylique, en présence de peroxyde d'hydrogène.

3. Utilisation des copolymères selon la revendication 1 ou 2, comme séquestrants, complexants et co-adjuvants dans des agents de lavage et de nettoyage.
